# EUROPEAN PATENT SPECIFICATION

(11) **EP 1 932 882 B1**
(45) Date of publication and mention of the grant of the patent: **21.09.2011**
(21) Application number: 06756839.4
(22) Date of filing: 31.05.2006
(51) Int. Cl.: C08F 220/10, C08L 33/04, C09D 4/00, C09D 133/04, C09D 163/00, G02B 1/10, G02B 5/23, G02C 7/10

(54) **HARDENABLE COMPOSITION AND OPTICAL MEMBER MAKING USE OF THE SAME**
HÄRTBARE ZUSAMMENSETZUNG UND OPTISCHES ELEMENT DAMIT
COMPOSITION DURCISSABLE ET ÉLÉMENT OPTIQUE FAISANT USAGE DE CELLE-CI

(30) Priority: 15.09.2005 JP 2005268810
(43) Date of publication of application: 18.06.2008
(73) Proprietor: HOYA CORPORATION, 161-8525 Tokyo (JP)
(72) Inventor: OTA, Hiroshi, Tokyo 161-8525 (JP); IMIZU, Takeshi, Tokyo 161-8525 (JP); SHINDE, Ken-ichi, Tokyo 161-8525 (JP)
(74) Representative: Albrecht, Thomas
(86) International application number: PCT/JP2006/310919
(87) International publication number: WO 2007/032127

(56) References cited:
- WO-A1-97/41185
- WO-A1-03/011967
- JP-A- 01 029 460
- JP-A- 2000 026 791
- JP-A- 2001 261 918

## Description

### TECHNICAL FIELD

The present invention relates to a hardenable composition and an optical member making use of the same. More particularly, the present invention relates to an optical member comprising a photochromic coating layer exhibiting excellent adhesion with an optical substrate and a great strength of a film and a hardenable composition used for the optical member.

### BACKGROUND ART

The photochromic function is a reversible function such that the color rapidly changes in response to light on exposure to light including ultraviolet light and returns to the original colorless condition in the absence of ultraviolet light. The photochromic function is utilized in plastic spectacle lenses.

As the process for producing a plastic spectacle lens exhibiting the photochromic function, a process in which the surface of a lens having no photochromic property is impregnated with a photochromic compound, a process in which a primer layer having the photochromic property and a hard coating layer are disposed on the surface of a lens, and a process in which a photochromic lens is directly obtained by dissolving a photochromic compound into a monomer, followed by polymerizing the monomer, have been proposed. In particular, the coating process is attracting attention since the process can be applied to various conventional plastic lenses.

In Patent Reference 1, a method in which the surface of a lens is coated with a solution obtained by dissolving a photochromic compound into a radical polymerizable monomer and the compound is then hardened by irradiation with ultraviolet light, is proposed. As the radical polymerizable monomer, a radical polymerizable monomer having silanol group or a group which forms silanol group by hydrolysis is used so that sufficient adhesion with the substrate can be obtained. However, for obtaining a sufficient adhesive force, it is necessary that a complicated pretreatment is conducted on the plastic lens before the photochromic layer is formed. Moreover, it is difficult that stable adhesion with the substrate is obtained.

A process in which a primer treatment is conducted to surely obtain sufficient adhesion between the substrate and the photochromic layer, is proposed. However, it is suspected that the process is complicated and the time for the film formation increases.
[Patent Reference 1] International Patent Application Laid-Open No. WO 03/011967

### DISCLOSURE OF THE INVENTION

### [Problems to be Overcome by the Invention]

The present invention is made to overcome the above problems and has an object of providing an optical member comprising a photochromic coating layer exhibiting excellent adhesion with an optical substrate and a great strength of the film and a hardenable composition used for the optical member.

### [Means for Overcoming the Problems]

As the result of intensive studies by the present inventors, it was found that the object could be achieved by using a composition comprising the following components (1) to (6). The present invention has been completed based on the knowledge.

The present invention provides a hardenable composition which comprises following components:
(1) a radical polymerizable monomer,
(2) an organosilicon compound having epoxy group at one end,
(3) an organosilicon compound having a radical polymerizable functional group at one end,
(4) an amine compound,
(5) a photochromic compound and
(6) a photopolymerization initiator,
wherein (2) the organosilicon compound having epoxy group at one end is a compound having silanol group or a compound having a group which forms silanol group by hydrolysis, and (3) the organosilicon compound having a radical polymerizable functional group at one end is a compound having silanol group or a compound having a group which forms silanol group by hydrolysis; and an optical member which comprises a photochromic coating layer formed by coating an optical substrate with the hardenable composition described above and hardening the hardenable composition.

### THE EFFECT OF THE INVENTION

The optical member of the present invention comprises a photochromic coating layer, and this coating layer exhibits excellent adhesion with an optical substrate and a great strength of the film. The hardenable composition of the present invention is suitable as the composition used as the material for the photochromic coating layer which exhibits excellent adhesion with an optical substrate and a great strength of a film with respect to various types of optical substrates.

### THE MOST PREFERRED EMBODIMENT TO CARRY OUT THE

### INVENTION

The present invention will be described specifically in the following.

The hardenable composition of the present invention comprises following components:
(1) a radical polymerizable monomer,
(2) an organosilicon compound having epoxy group at one end,
(3) an organosilicon compound having a radical polymerizable functional group at one end,
(4) an amine compound,
(5) a photochromic compound and
(6) a photopolymerization initiator,
wherein (2) the organosilicon compound having epoxy group at one end is a compound having silanol group or a compound having a group which forms silanol group by hydrolysis, and (3) the organosilicon compound having a radical polymerizable functional group at one end is a compound having silanol group or a compound having a group which forms silanol group by hydrolysis.

The components described above will be described more specifically in the following.

In the hardenable composition of the present invention, the radical polymerizable monomer of component (1) is not particularly limited, and conventional compounds having a radical polymerizable group such as (meth)acryloyl group, (meth)acryloyloxy group, vinyl group, allyl group and styryl group can be used without any restrictions. Among the above compounds, compounds having (meth)acryloyl group or (meth)acryloyloxy group as the radical polymerizable group are preferable since these compounds are easily available and exhibit the excellent hardening property.

In the above description, "(meth)acryloyl" means both of "acryloyl" and "methacryloyl".

As the radical polymerizable monomer, a monomer providing a homopolymer exhibiting an L-scale Rockwell hardness of 60 or greater (referred to occasionally as a high hardness monomer, hereinafter) and a monomer providing a homopolymer exhibiting an L-scale Rockwell hardness of 40 or smaller (referred to occasionally as a low hardness monomer, hereinafter) are used in combination so that excellent properties of the hardened product such as the solvent resistance, the hardness and the heat resistance and excellent photochromic properties such as the density of the developed color and the rate of discoloration are obtained after the hardening.

The L-scale Rockwell hardness means the hardness measured in accordance with the method of Japanese Industrial Standard B7726.

It can be easily found by the measurement in accordance with the above method whether a homopolymer of a monomer satisfies the above condition of the hardness or not. Specifically, the above measurement can be conducted easily by measuring the L-scale Rockwell hardness using a Rockwell hardness meter after a hardened product having a thickness of 2 mm is obtained by polymerizing a monomer and the obtained polymer is kept in a room at 25°C for one day.

A polymer obtained in accordance with the casting polymerization under the condition such that 90% or more of the polymerizable group in the used monomer is polymerized is used for the above measurement of the L-scale Rockwell hardness. When the polymer obtained by the polymerization under the above condition is used, an approximately constantly reproducible value is obtained in the measurement of the L-scale Rockwell hardness.

The high hardness monomer described above exhibits the effect of improving the solvent resistance, the hardness and the heat resistance of the product obtained by the hardening. Radical polymerizable monomers providing homopolymers exhibiting an L-scale Rockwell hardness of 65 to 130 are preferable so that the above effect is more effectively exhibited.

The high hardness monomer is a compound having, in general, 2 to 15 and preferably 2 to 6 radical polymerizable groups. Preferable examples of the above compound include compounds represented by the following general formulae (1) to (5):

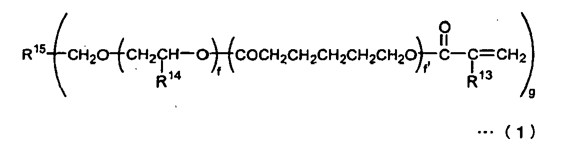

In the above general formula (1), R¹³ represents hydrogen atom or methyl group, R¹⁴ represents hydrogen atom, methyl group or ethyl group, R¹⁵ represents a tri- to hexavalent organic group, f represents an integer of 0 to 3, f represents an integer of 0 to 3, and g represents an integer of 3 to 6.

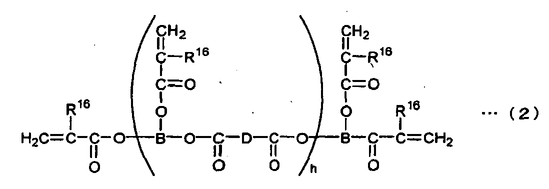

In the above general formula (2), R¹⁶ represents hydrogen atom or methyl group, B represents a trivalent organic group, D represents a divalent organic group, and h represents an integer of 1 to 10.

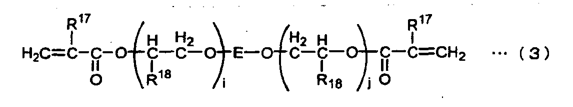

In the above general formula (3), R¹⁷ represents hydrogen atom or methyl group, R¹⁸ represents hydrogen atom, methyl group, ethyl group or hydroxyl group, E represents a divalent organic group having a cyclic group, and i and j each represent a positive integer providing an average of the sum of the integers represented by i+j in the range of 0 to 6.

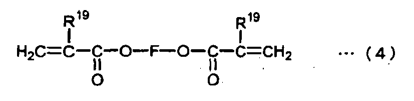

In the above general formula (4), R¹⁹ represents hydrogen atom or methyl group, and F represents an alkylene group having 2 to 9 carbon atoms in the main chain which may have side chains.

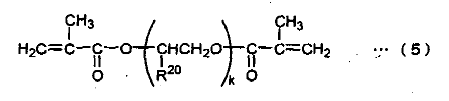

In the above general formula (5), R²⁰ represents hydrogen atom, methyl group or ethyl group, and k represents an integer of 1 to 6.

Since R¹³ to R¹⁹ in general formulae (1) to (4) each represent hydrogen atom or methyl group, the compounds represented by general formulae (1) to (4) are compounds having 2 to 6 (meth)acryloyloxy groups.

In general formula (1), R¹⁴ represents hydrogen atom, methyl group or ethyl group.

In general formula (1), R¹⁵ represents a tri- to hexavalent organic group. The organic group is not particularly limited. The main chain in the organic group may have bonds other than the carbon-carbon bond such as the ester bond, the ether bond, the amide bond, the thioether bond, the sulfonyl bond and the urethane bond. It is preferable that R¹⁵ represents an organic group having 1 to 30 carbon atoms, and it is more preferable that R¹⁵ represents an organic group having 1 to 15 carbon atoms which may have the ether bond and/or the urethane bond so that the homopolymer exhibits an L-scale Rockwell hardness of 60 or greater.

f and f' each independently represent an integer of 0 to 3. It is preferable that the sum of the integers represented by f and f' is 0 to 3 so that the homopolymer exhibits an L-scale Rockwell hardness of 60 or greater.

Examples of the high hardness monomer represented by general formula (1) include trimethylolpropane trimethacrylate, trimethylolpropane triacrylate, tetramethylolmethane trimethacrylate, tetramethylolmethane triacrylate, trimethylolpropane trimethacrylate, tetramethylolmethane tetramethacrylate, tetramethylolmethane tetraacrylate, trimethylolpropane triethylene glycol trimethacrylate, trimethylolpropane triethylene glycol triacrylate, pentaerythritol tetraacrylate modified with ethoxy group, pentaerythritol tetramethacrylate modified with ethoxy group, pentaerythritol trimethacrylate, pentaerythritol tetramethacrylate, dipentaerythritol hexaacrylate, urethane oligomer tetraacrylates, urethane oligomer hexamethacrylates, urethane oligomer hexaacrylates, polyester oligomer hexaacrylates, dipentaerythritol hexaacrylate modified with caprolactone and ditrimethylolpropane tetraacrylate.

In general formula (2), B represents a trivalent organic group, and D represents a divalent organic group. The groups represented by B and D are not particularly limited. The main chain in the groups may have bonds other than the carbon-carbon bond such as the ester bond, the ether bond, the amide bond, the thioether bond, the sulfonyl bond and the urethane bond. It is preferable that B represents an organic group derived from a linear or branched hydrocarbon having 3 to 10 carbon atoms, and D represents an organic group derived from a linear or branched aliphatic hydrocarbon having 1 to 10 carbon atoms or an aromatic hydrocarbon having 6 to 10 carbon atoms so that the homopolymer exhibits an L-scale Rockwell hardness of 60 or greater.

h represents an integer of 1 to 10 and preferably an integer of 1 to 6 so that the homopolymer exhibits an L-scale Rockwell hardness of 60 or greater.

Examples of the high hardness monomer represented by general formula (2) include tetrafunctional polyester oligomers having a molecular weight of 2,500 to 3,500 (such as EB80 manufactured by DAICEL UCB Co. Ltd.), tetrafunctional polyester oligomers having a molecular weight of 6,000 to 8,000 (such as EB450 manufactured by DAICEL UCB Co. Ltd.), hexafunctional polyester oligomers having a molecular weight of 45,000 to 55,000 (such as EB1830 manufactured by DAICEL UCB Co. Ltd.) and tetrafunctional polyester oligomers having a molecular weight of 10,000 (such as GX8488B manufactured by DAIICHI KOGYO SEIYAKU Co., Ltd.).

In general formula (3), R¹⁸ represents hydrogen atom, methyl group, ethyl group or hydroxyl group. E in general formula (3) represents a divalent organic group having a cyclic group. The organic group is not particularly limited as long as the organic group has a cyclic group. The organic group may have a bond other than the carbon-carbon bond such as the ester bond, the ether bond, the amide bond, the thioether bond, the sulfonyl bond and the urethane bond in the main chain. Examples of the cyclic group in the organic group represented by E include benzene ring, cyclohexane ring, adamantane ring and cyclic groups shown in the following:

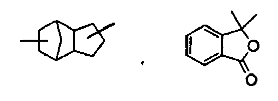

It is preferable that the cyclic group in the organic group represented by E is benzene ring. It is more preferable that the organic group represented by E is a group represented by the following formula: 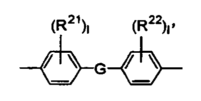 wherein G represents oxygen atom, sulfur atom or a group selected from -S(O₂)-, -(CO)-, -CH₂-, -CH=CH-, -C(CH₃)₂- and -C(CH₃)(C₆H₅)-, R²¹ and R²² each independently represent an alkyl group having 1 to 4 carbon atoms or a halogen atom, and 1 and 1' each independently represent an integer of 0 to 4. It is most preferable that the organic group represented by E is a group expressed by the following formula:

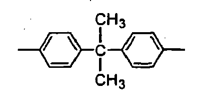

In general formula (3) shown above, i and j each represent a positive integer providing an average of the sum of the integers represented by i+j in the range of 0 to 6. The compound represented by general formula (3) is obtained, in general, as a mixture of a plurality of compounds represented by general formula (3) in which i and j represent various different integers except the case where i and j both represent 0. Since the isolation of the individual compounds is difficult, the values of i and j are defined based on the average of the sum represented by i+j. It is preferable that the average of the sum represented by i+j is 2 to 6.

Examples of the high hardness monomer represented by general formula (3) include bisphenol A dimethacrylate, 2,2-bis(4-methacryloyloxyethoxyphenyl)propane and 2,2-bis(3,5-dibromo-4-methacryloyloxy-ethoxyphenyl)propane.

In general formula (4), R¹⁹ represents hydrogen atom or methyl group, and F represents an alkylene group having 2 to 9 carbon atoms in the main chain which may have side chains. Examples of the alkylene group having 2 to 9 carbon atoms in the main chain include ethylene group, propylene group, trimethylene group, butylene group, neopentylene group, hexylene group and nonylylene group.

Examples of the high hardness monomer represented by general formula (4) include ethylene glycol diacrylate, ethylene glycol dimethacrylate, 1,4-butylene glycol dimethacrylate, 1,9-nonylene glycol dimethacrylate, neopentylene glycol dimethacrylate and noepentylene glycol diacrylate.

In general formula (5), R²⁰ represents hydrogen atom, methyl group or ethyl group, and k represents an integer of 2 to 6 and preferably 3 or 4.

Examples of the high hardness monomer represented by general formula (5) include diethylene glycol dimethacrylate, triethylene glycol dimethacrylate, tetraethylene glycol dimethacrylate, tripropylene glycol dimethacrylate and tetrapropylene glycol dimethacrylate.

The compounds represented by general formulae (1) to (5) include compounds providing a homopolymer exhibiting an L-scale Rockwell hardness smaller than 60 depending on the combination of the substituents. When a compound provides a homopolymer exhibiting an L-scale Rockwell hardness smaller than 60, the compound is classified as the low hardness monomer or the intermediate hardness monomer which are described below.

The high hardness monomer include compounds which are not represented by any of general formulae (1) to (5). Examples of the compound which is not represented by any of general formulae (1) to (5) include bisphenol A diglycidyl methacrylate, ethylene glycol bisglycidyl methacrylate and glycidyl methacrylate.

The low hardness monomer exhibits the effect of making the hardened product tough and improving the rate of discoloration of the photochromic compound.

Examples of the low hardness monomer include the following compounds.

Difunctional monomers represented by the following general formula (6): 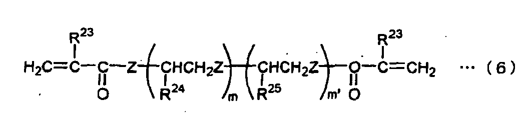 wherein R²³ represents hydrogen atom or methyl group, R²⁴ and R²⁵ each independently represent hydrogen atom, methyl group or ethyl group, Z represents oxygen atom or sulfur atom, m represents an integer of 1 to 70 when R²³ represents hydrogen atom and an integer of 7 to 70 when R²³ represents methyl group, and m' represents an integer of 0 to 70.

Difunctional monomers represented by the following general formula (7): 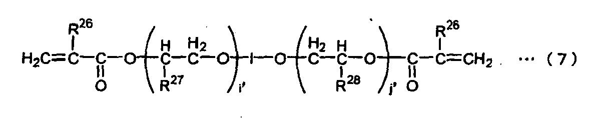 wherein R²⁶ represents hydrogen atom or methyl group, R²⁷ and R²⁸ each independently represent hydrogen atom, methyl group, ethyl group or hydroxyl group, I represents a divalent organic group having a cyclic group, and i' and j' each represent an integer providing an average of the sum of the integers represented by i'+j' in the range of 8 to 40.

Monofunctional monomers represented by the following general formula (8): 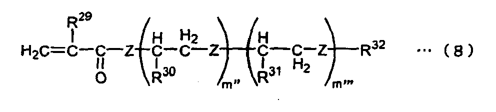 wherein R²⁹ represents hydrogen atom or methyl group, R³⁰ and R³¹ each independently represent hydrogen atom, methyl group or ethyl group, R³² represents hydrogen atom, a group having 1 to 25 carbon atoms selected from an alkyl group, an alkenyl group, an alkoxyalkyl group and a haloalkyl group, an aryl group having 6 to 25 carbon atoms or an acyl group having 2 to 25 carbon atoms other than (meth)acryloyl group, Z represents oxygen atom or sulfur atom, m" represents an integer of 1 to 70 when R²⁹ represents hydrogen atom and an integer of 4 to 70 when R²⁹ represents methyl group, and m"' represents an integer of 0 to 70.

Monofunctional monomers represented by the following general formula (9): 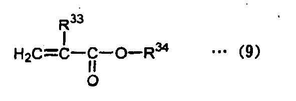 wherein R³³ represents hydrogen atom or methyl group, and R³⁴ represents an alkyl group having 1 to 20 carbon atoms when R³³ represents hydrogen atom and an alkyl group having 8 to 40 carbon atoms when R³³ represents methyl group.

In general formulae (6) to (9) shown above, R²³, R²⁶, R²⁹ and R³³ each represent hydrogen atom or methyl group. This means that the low hardness monomer has, in general, at most two (meth)acryloyloxy groups or (meth)acryloylthio group as the polymerizable group.

In general formula (6), R²⁴ and R²⁵ each independently represent hydrogen atom, methyl group or ethyl group, and Z represents oxygen atom or sulfur atom.

In general formula (6), m represents an integer of 1 to 70 when R²³ represents hydrogen atom, i.e., when the monomer has acryloyloxy group or acryloylthio group as the polymerizable group, and m represents an integer of 7 to 70 when R²³ represents methyl group, i.e., when the monomer has methacryloyloxy group or methacryloylthio group as the polymerizable group. m' represents an integer of 0 to 70.

Examples of the low hardness monomer represented by general formula (6) include alkylene glycol di(meth)acrylates such as trialkylene glycol diacrylates, tetraalkylene glycol diacrylates, nonylalkylene glycol diacrylates and nonylalkylene glycol dimethacrylate.

In general formula (7), R²⁶ represents hydrogen atom, methyl group or ethyl group.

I represents a divalent organic group having a cyclic group. Examples of the group represented by I include the groups described above as the examples of the group having a cyclic group which is represented by E in general formula (3). In general formula (7), i' and j' each represent an integer providing an average of the sum of the integers represented by i'+j' in the range of 8 to 40 and preferably in the range of 9 to 30. The values of i' and j' are defined based on the average of the sum represented by i'+j' due to the same reason as that described above.

Examples of the low hardness monomer represented by general formula (7) include 2,2-bis(4-acryloyloxypolyethylene glycol phenyl)-propane having an average molecular weight of 776.

In general formula (8), R²⁹ represents hydrogen atom or methyl group, and R³⁰ and R³¹ each independently represent hydrogen atom, methyl group or ethyl group. R³² represents hydrogen atom, a group having 1 to 25 carbon atoms selected from an alkyl group, an alkenyl group, an alkoxyalkyl group and a haloalkyl group, an aryl group having 6 to 25 carbon atoms or an acyl group having 2 to 25 carbon atoms other than (meth)acryloyl group.

Examples of the alkyl group and alkenyl group having 1 to 25 carbon atoms include methyl group, ethyl group, propyl group and nonyl group. The alkyl group and the alkenyl group may be linear or branched and may be substituted with a substituent such as a halogen atom, hydroxyl group, an aryl group and epoxy group.

Examples of the alkoxyalkyl group having 1 to 25 carbon atoms include methoxybutyl group, ethoxybutyl group, butoxybutyl group and methoxynonyl group.

Examples of the aryl group having 6 to 25 carbon atoms include phenyl group, toluyl group, anthranyl group and octylphenyl group. Examples of the acyl group other than (meth)acryloyl group include acetyl group, propionyl group, butyryl group, valeryl group and oleyl group.

In genera formula (8), m" represents an integer of 1 to 70 when R²⁹ represents hydrogen atom, i.e., when the compound has acyloyloxy group or acryloylthio group as the polymerizable group, and an integer of 4 to 70 when R²⁹ represents methyl group, i.e., when the compound has methacryloyloxy group or methacryloylthio group as the polymerizable group, and m"' represents an integer of 0 to 70.

Examples of the low hardness monomer represented by general formula (8) include polyalkylene glycol (meth)acrylates such as polyethylene glycol methacrylate having an average molecular weight of 526, polyethylene glycol methacrylate having an average molecular weight of 360, methyl ether polyethylene glycol methacrylate having an average molecular weight of 475, methyl ether polyethylene glycol methacrylate having an average molecular weight of 1,000, polypropylene glycol methacrylate having an average molecular weight of 375, polypropylene methacrylate having an average molecular weight of 430, polypropylene methacrylate having an average molecular weight of 622, methyl ether polypropylene glycol methacrylate having an average molecular weight of 620, polytetramethylene glycol methacrylate having an average molecular weight of 566, octyl phenyl ether polyethylene glycol methacrylate having an average molecular weight of 2,034, nonyl ether polyethylene glycol methacrylate having an average molecular weight of 610, methyl ether polyethylene thioglycol methacrylate having an average molecular weight of 640 and perfluoroheptyl ethylene glycol methacrylate having an average molecular weight of 498.

In general formula (9), R³³ represents hydrogen atom or methyl group, and R³⁴ represents an alkyl group having 1 to 20 carbon atoms when R³³ represents hydrogen atom and an alkyl group having 8 to 40 carbon atoms when R³³ represents methyl group. The alkyl group may be linear or branched and may be substituted with a substituent such as a halogen atom, hydroxyl group, an alkoxyl group, an acyl group and epoxy group.

Examples of the low hardness monomer represented by general formula (9) include stearyl methacrylate, lauryl methacrylate, ethylhexyl methacrylate, methyl acrylate, ethyl acrylate, butyl acrylate and lauryl acrylate.

Among the low hardness monomers represented by general formulae (6) to (9), methyl ether polyethylene glycol methacrylate having an average molecular weight of 475, methyl ether polyethylene glycol methacrylate having an average molecular weight of 1,000, trialkylene glycol diacrylates, tetraalkylene glycol diacrylates, nonylalkylene glycol diacrylates, methyl acrylate, ethyl acrylate, butyl acrylate and lauryl acrylate are preferable.

The compounds represented by general formulae (6) to (9) include compounds providing homopolymers exhibiting an L-scale Rockwell hardness of 40 or greater depending on the combination of the substituents. When a compound provides a homopolymer exhibiting an L-scale Rockwell hardness of 40 or greater, the compound is classified as the high hardness monomer described above or the intermediate hardness monomer described below.

Examples of the monomer providing a homopolymer exhibiting an L-scale Rockwell hardness greater than 40 and smaller than 60, which is not the high hardness monomer or the low hardness monomer described above (referred to occasionally as an intermediate hardness monomer, hereinafter) include difunctional methacrylates such as polytetramethylene glycol dimethacrylate having an average molecular weight of 650, polytetramethylene glycol dimethacrylate having an average molecular weight of 1,400, bis(2-methacryloyloxyethylthioethyl) sulfide; polyvalent allyl compounds such as diallyl phthalate, diallyl isophthalate, diallyl oxalate, diallyl epoxysuccinate, diallyl fumarate, diallyl chlorendate, diallyl hexaphthalate and allyl diglycol carbonate; ester compounds of polyvalent thioacrylic acids and polyvalent thiomethacrylic acids such as 1,2-bis(methacryloylthio)ethane, bis(2-acryloylthioethyl) ether and 1,4-bis(methacryloylthiomethyl)benzene; unsaturated carboxylic acids such as acrylic acid, methacrylic acid and maleic anhydride; ester compounds of acrylic acid and methacrylic acid such as methyl methacrylate, butyl methacrylate, benzyl methacrylate, phenyl methacrylate, 2-hydroxyethyl methacrylate and biphenyl methacrylate; ester compounds of fumaric acid such as diethyl fumarate and diphenyl fumarate; ester compounds of thioacrylic acid and thiomethacrylic acid such as methyl thioacrylate, benzyl thioacrylate and benzyl thiomethacrylate; vinyl compounds such as styrene, chlorostyrene, methylstyrene, vinylnaphthalene, α-methylstyrene dimer, bromostyrene, divinylbenzene and vinylpyrrolidone; and (meth)acrylates having unsaturated bonds in the molecule and a hydrocarbon chain having 6 to 25 carbon atoms such as oleyl methacrylate, nerol methacrylate, geraniol methacrylate, linarool methacrylate and farnesol methacrylate.

The intermediate hardness monomer can be used. The high hardness monomer, the low hardness monomer and the intermediate hardness monomer described above can be used as a suitable mixture. It is preferable that the radical polymerizable monomer comprises 5 to 70% by weight of the low hardness monomer and 5 to 95% by weight of the high hardness monomer so that the balance between the properties of the hardened product such as the solvent resistance, the hardness and the heat resistance and the photochromic properties such as the density of the developed color and the rate of discoloration is made excellent. It is more preferable that the high hardness monomer used above comprises at least 5% by weight of a monomer having three or more radical polymerizable groups in other radical polymerizable monomers.

It is preferable that the radical polymerizable monomer used in the present invention further comprises a radical polymerizable monomer having at least one epoxy group and at least one radical polymerizable group in the molecule (briefly referred to occasionally as an epoxy-based monomer, hereinafter) in combination with the monomers classified above in accordance with the hardness. The epoxy-based monomer may provide a homopolymer having an L-scale Rockwell hardness of 60 or greater or a homopolymer having an L-scale Rockwell hardness of 40 or smaller depending on the structure. When the epoxy-based monomer is classified in accordance with the hardness of the provided homopolymer, the epoxy-based monomer can be classified into one of the high hardness monomer, the low hardness monomer and the intermediate hardness monomer in accordance with the hardness.

The durability of the photochromic compound can be further improved and the adhesion of the photochromic coating layer can also be improved by using the epoxy-based monomer as a component of the radical polymerizable monomer in the present invention.

As the epoxy-based monomer, conventional compounds can be used. Compounds having (meth)acryloyloxy group as the radical polymerizable group are preferable.

The epoxy-based monomer is, in general, represented by the following general formula (10):

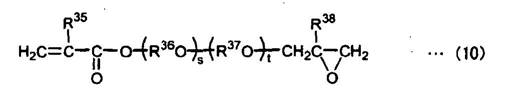

In general formula (10), R³⁵ and R³⁸ each independently represent hydrogen atom or methyl group, and R³⁶ and R³⁷ each independently represent an alkylene group having 1 to 4 carbon atoms or a group represented by the following formula: 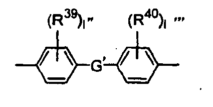 wherein G' represents oxygen atom, sulfur atom or a group selected from -S(O₂)-, -(CO)-, -CH₂-, -CH=CH-, -C(CH₃)₂- and -C(CH₃)(C₆H₅)-, R³⁹ and R⁴⁰ each independently represent an alkyl group having 1 to 4 carbon atoms or a halogen atom, and l" and l"' each independently represent an integer of 0 to 4.

Examples of the alkylene group having 1 to 4 carbon atoms which is represented by R³⁶ and R³⁷ include methylene group, ethylene group, propylene group, trimethylene group and butylene group. The alkylene group may be substituted with hydroxyl group or a halogen atom.

When R³⁶ and/or R³⁷ represents a group represented by the following general formula: 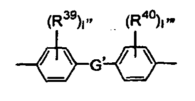 G' represents oxygen atom, sulfur atom or a group selected from -S(O₂)-, -(CO)-, -CH₂-, -CH=CH-, -C(CH₃)₂- and -C(CH₃)(C₆H₅)-, R³⁹ and R⁴⁰ each independently represent an alkyl group having 1 to 4 carbon atoms such as methyl group, ethyl group, propyl group and butyl group or a halogen atom such as chorine atom and bromine atom, and 1" and 1"' each independently represent an integer of 0 to 4. As the group represented by the above general formula, the group expressed by the following formula is most preferable:

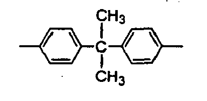

Examples of the epoxy-based monomer represented by general formula (10) include glycidyl acrylate, glycidyl methacrylate, β-methylglycidyl methacrylate, bisphenol A monoglycidyl ether methacrylate, 4-glycidyloxy methacrylate, 3-(gylcidyl-2-oxyethoxy)-2-hydroxypropyl methacrylate, 3-(glycidyloxy-1-isopropyloxy)-2-hydroxypropyl acrylate, 3-glycidyloxy-2-hydroxypropyloxy)-2-hydroxypropyl acrylate and glycidyloxypolyethylene glycol methacrylates having an average molecular weight of 540. Among the above compounds, glycidyl acrylate, glycidyl methacrylate and glycidyloxypolyethylene glycol methacrylates having an average molecular weight of 40 are preferable.

The content of the epoxy-based monomer in the radical polymerizable monomer is, in general, 0.01 to 30% by weight and preferably 0.1 to 20% by weight.

Since the hardenable composition of the present invention comprises the organosilicon compound having epoxy group at one end as component (2), the stable adhesion with the substrate can be provided to the photochromic coating layer obtained by coating the substrate with the hardenable composition, followed by hardening the hardenable composition.

The organosilicon compound of component (2) is a compound having silanol group or a compound having a group forming silanol group by hydrolysis. Examples of the organosilicon compound include organosilicon compounds represented by the following general formula (I):

(R⁸¹)ₐ(R⁸³)_{b}Si(OR⁸²)_{4-(a+b)} (I)

and hydrolysis products thereof.

In general formula (I), R⁸¹ represents an organic group having epoxy group, R⁸² represents an alkyl group having 1 to 4 carbon atoms, an acyl group having 1 to 4 carbon atoms or an aryl group having 6 to 10 carbon atoms, R⁸³ represents an alkyl group having 1 to 6 carbon atoms or an aryl group having 6 to 10 carbon atoms, a represents an integer of 1, and b represents an integer of 0 or 1.

Examples of the epoxy group represented by R⁸¹ include epoxy group, glycidoxy group such as α-glycidoxy group, β-glycidoxy group, γ-glycidoxy group and δ-glycidoxy group and 3,4-epoxycyclohexyl group.

Examples of the alkyl group having 1 to 4 carbon atoms which is represented by R⁸² include linear and branched methyl group, ethyl group, propyl groups and butyl groups.

Examples of the acyl group having 1 to 4 carbon atoms which is represented by R⁸² include acetyl group, propionyl group, oleyl group and benzoyl group.

Examples of the aryl group having 6 to 10 carbon atoms which is represented by R⁸² include phenyl group, xylyl group and tolyl group.

Examples of the alkyl group having 1 to 4 carbon atoms which is represented by R⁸³ include linear and branched methyl group, ethyl group, propyl groups, butyl groups, pentyl groups and hexyl groups.

Examples of the aryl group having 6 to 10 carbon atoms which is represented by R⁸³ include phenyl group, xylyl group and tolyl group.

Examples of the compound represented by general formula (I) include glycidoxymethyltriethoxysilane, α-glycidoxyethyltriethoxysilane, β-glycidoxylethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxyailane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyttrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxy silane, β-(3,4-epoxycyclohexyl)ethyltripropoxysilane, β-(3,4-epoxycyclohexyl)ethyltributoxysilane, β-(3,4-epoxycyclohexy)ethyltriphenoxy, silane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3.4-epxoycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glylcidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane and γ-glycidoxypropylphenyldiethoxysilane-Among these compounds, γ-glycidoxypropyltrimethoxysilane, γ-glycidoxypropyltriethoxysilane, γ-glycidoxypropyltripropoxyailane, γ-glycidoxypropyltributoxysilane, γ-glycidoxypropylmethyldiethoxysilane, γ-glycidoxypropylethyldimethoxysilane and γ-glycidoxypropylethyldiethoxysilane are preferable.

The content of the organosilicon compound of component (2) in the entire hardenable composition is, in general, 0.1 to 15% by weight and preferably 1.0 to 10% by weight based on 100% by weight of the radical polymerizable monomer.

Since the hardenable composition of the present invention comprises the organosilicon compound having a radical polymerizable functional group at one end as component (3), the strength of the film of the photochromic coating layer obtained by coating the substrate with the hardenable composition, followed by hardening the hardenable composition, can be increased.

The organosilicon compound of component (3) is a compound having silanol group or a compound having a group forming silanol group by hydrolysis. Examples of the organosilicon compound of component (3) include organosilicon compounds represented by the following general formula (II):

(R⁸⁴)_{c}(R⁸⁶)_{d}Si(OR⁸⁶)_{4-(c+d)} (II)

or a hydrolysis product thereof.

In general formula (II), R⁸⁴ represents an organic group having a radical polymerizable group, R⁸⁵ represents an alkyl group having 1 to 4 carbon atoms, an acyl group having 1 to 4 carbon atoms or an aryl group having 6 to 10 carbon atoms, R⁸⁵ represents an alkyl group having 1 to 6 carbon atoms or an aryl group having 6 to 10 carbon atoms, c represents an integer of 1, and d represents an integer of 0 or 1.

Examples of the organic group having a radical polymerizable group which is represented by R⁸⁴ include (meth)acryloyl group, (meth)acryloyloxy group, vinyl group, allyl group and styryl group. Among these groups, (meth)acryloyl group or (meth)acryloyloxy group are preferable since compounds having these groups are easily available and exhibit the excellent hardening property.

Examples of the alkyl group having 1 to 4 carbon atoms which is represented by R⁸⁵ include linear and branched methyl group, ethyl group, propyl groups and butyl groups.

Examples of the acyl group having 1 to 4 carbon atoms which is represented by R⁸⁵ include acetyl group, propionyl group, oleyl group and benzoyl group.

Examples of the aryl group having 6 to 10 carbon atoms which is represented by R⁸⁵ include phenyl group, xylyl group and tolyl group.

Examples of the alkyl group having 1 to 4 carbon atoms which is represented by R⁸⁶ include linear and branched methyl group, ethyl group, propyl groups, butyl groups, pentyl groups and hexyl groups.

Examples of the aryl group having 6 to 10 carbon atoms which is represented by R⁸⁶ include phenyl group, xylyl group and tolyl group.

Examples of the compound represented by general formula (II) include γ-methacryloyloxypropyltrimethoxysilane, γ-methacryloyloxypropyltriethoxysilane, γ-methacryloyloxypropylmethyldimethoxysilane, (3-acryloxypropyl)dimethylmethoxysilane, (3-acryloxypropyl)methyldimethoxysilane, (3-acryloxypropyl)trimethoxysilane, (methacryloxymethyl)dimethylethoxysilane, methacryloxymethyltriethoxysilane, methacryloxymethyltrimethoxysilane, methacryloxypropyldimethylethoxysilane and methacryloxypropyldimethylmethoxysilane.

The content of the organosilicon compound of component (3) in the entire hardenable composition is, in general, 0.1 to 15 parts by weight and preferably 1.0 to 10 parts by weight based on 100 parts by weight of the radical polymerizable monomer.

The hardenable composition of the present invention comprises an amine compound as component (4). Since the hardenable composition comprises the amine compound as component (4), the adhesion of the substrate and the photochromic coating layer obtained by coating the substrate with the hardenable composition, followed by hardening the hardenable composition, can be remarkably improved.

As the amine compound used in the present invention, conventional amine compounds can be used without any restrictions as long as the amine compounds are basic compounds which work as the catalyst for condensation or addition of the radical polymerizable monomer.

Examples of the compound which does not exhibit the function required for the amine compound of the present invention include hindered amine compounds having, as the amino group, an amino group represented by the following general formula alone:

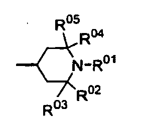

In the above formula, R⁰¹ represents hydrogen atom or an alkyl group, and R⁰², R⁰³, R⁰⁴ and R⁰⁵ each represent an alkyl group which may be the same with or different from each other.

Examples of the amine compound which can be used in the present invention include non-polymerizable low molecular weight amine compounds such as triethanolamine, N-methyldiethanolamine, triisopropanolamine, 4,4-dimethylaminobenzophenone and diazabicyclooctane; amine compounds having a polymerizable group such as N,N-dimethylaminoethyl methacrylate and N,N-diethylaminoethyl methacrylate; and amine compounds having silyl group such as n-(hydroxyethyl)-N-methylaminopropyltrimethoxysilane, dimethoxyphenyl-2-piperidinoethoxysilane, N,N-diethyaminomethyltrimethylsilane and (N,N-diethyl-3-aminopropyl)trimethoxysilane.

Among these amine compounds, amine compounds having hydroxyl group, amine compounds having (meth)acryloyloxy group as the radical polymerizable group and amine compounds having a group which can form silanol group by hydrolysis are preferable from the standpoint of the improvement in the adhesion.

For example, amine compounds represented by the following general formula (11): 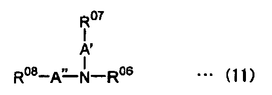 are more preferable as the amine compound exhibiting the strong basicity and the excellent effect of enhancing the adhesion.

In the above general formula (11), R⁰⁶ represents hydrogen atom or a linear alkyl group having 1 to 4 carbon atoms, R⁰⁷ represents hydroxyl group, (meth)acryloyloxy group or a group which can form silanol group by hydrolysis, R⁰⁸ represents hydrogen atom, an alkyl group having 1 to 6 carbon atoms, hydroxyl group, (meth)acryloyloxy group or a group which can form silanol group by hydrolysis, A' represents an alkylene group having 2 to 6 carbon atoms, A" represents an alkylene group having 1 to 6 carbon atoms when R⁰⁸ represents hydrogen atom or an alkyl group and an alkylene group having 2 to 6 carbon atoms when R⁰⁸ represents hydroxyl group, (meth)acryloyloxy group or a group which can form silanol group by hydrolysis;

The group which can form silanol group by hydrolysis represented by R⁰⁷ and R⁰⁸ in general formula (11) is as defined above for the corresponding group in the organosilicon compound.

The amine compound can be used singly or in combination of two or more. The content of the amine compound of component (4) is 0.01 to 20 parts by weight and preferably 0.1 to 10 parts by weight based on 100 parts by weight of the radical polymerizable monomer.

As the photochromic compound of component (5) used in the hardenable composition of the present invention, conventional compounds can be used. For example, the photochromic compounds such as flugimide compounds, spirooxane compounds and chromene compounds can be used. The above photochromic compounds can be used without any restrictions in the present invention.

As the flugimide compound, the spirooxane compound and the chromene compound described above, for example, compounds described in Japanese Patent Application Laid-Open No. Heisei 2(1990)-28154, Japanese Patent Application Laid-Open No. Showa 62(1987)-288830, WO 94/22850 and WO 96/14596 are preferable.

As the compound exhibiting the excellent photochromic property, for example, compounds disclosed in Japanese Patent Application Laid-Open Nos. 2001-114775, 2001-031670, 2001-011067, 2001-011066, 2000-347346, 2000-34476, 2000-3044761, 2000-327676, 2000-327675, 2000-256347, 2000-229976, 2000-229975, 2000-229974, 2000-229973, 2000-229972, 2000-219687, 2000-219686, 2000-219685, Heisei 11(1999)-322739, Heisei 11(1999)-286484, Heisei 11(1999)-279171, Heisei 10(1998)-298176, Heisei 09(1997)-218301, Heisei 09(1997)-124645, Heisei 08(1996)-295690, Heisei 08(1996)-176139 and Heisei 08(1996)-157467 are preferable.

Among the above photochromic compounds, chromene-based photochromic compounds are more preferable since the durability of the photochromic properties are more excellent than those of other photochromic compounds and the density of the developed color and the rate of discoloration are remarkably more excellent than those of other photochromic compounds. Among the above chromene-based photochromic compounds, compounds having a molecular weight of 540 or greater are most preferable since the improvement in the exhibition of the photochromic properties such as the density of the developed color and the rate of discoloration in accordance with the present invention is remarkably greater than other chromene-based compounds.

As the chromene compounds exhibiting remarkably excellent photochromic properties such as the density of the color development, the rate of discoloration and the durability, compounds represented by the following general formula (12) are preferable:

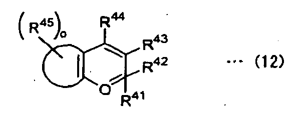

In the above general formula (12), the group represented by the following general formula (13): 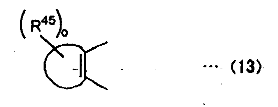 is a substituted or unsubstituted aromatic hydrocarbon group or a substituted or unsubstituted unsaturated heterocyclic group.

R⁴³, R⁴⁴ and R⁴⁵ each independently represent hydrogen atom, an alkyl group, an alkoxyl group, an aralkoxy group, amino group, a substituted amino group, cyano group, a substituted or unsubstituted aryl group, a halogen atom, an aralkyl group, hydroxyl group, a substituted or unsubstituted alkynyl group, a substituted or unsubstituted heterocyclic group having nitrogen atom as the heteroatom in which the nitrogen atom and pyran ring or the ring in the group represented by general formula (13) shown above are bonded to each other, or a condensed heterocyclic group in which an aromatic hydrocarbon ring or an aromatic heterocyclic ring is condensed with the above heterocyclic group, and o represents a integer of 0 to 6.

R⁴¹ and R⁴² each independently represent a group represented by general formula (14) shown in the following, a group represented by general formula (15) shown in the following, a substituted or unsubstituted aryl group, a substituted or unsubstituted heteroaryl group or an alkyl group. R⁴¹ and R⁴² in combination may represent an aliphatic hydrocarbon ring or an aromatic hydrocarbon ring.

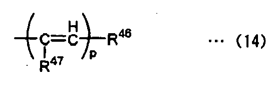

In the above general formula (14), R⁴⁶ represents a substituted or unsubstituted aryl group or a substituted or unsubstituted heteroaryl group, R⁴⁷ represents hydrogen atom, an alkyl group or a halogen atom, and p represents a integer of 1 to 3.

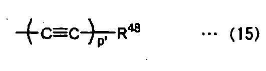

In the above genera formula (15), R⁴⁸ represents a substituted or unsubstituted aryl group or a substituted or unsubstituted heteroaryl group, and p' represents an integer of 1 to 3.

Examples of the substituent in the substituted aryl group and the substituted heteroaryl group represented by general formula (14), general formula (15), R⁴¹ and R⁴² include the groups represented by R⁴³ and R⁴⁴ described above.

Among the chromene compounds represented by general formula (12), compounds represented by the following general formulae (16) to (21) are preferable from the standpoint of the photochromic properties such as the density of developed color and the rate of discoloration and the durability.

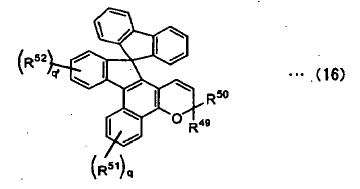

In the above general formula (16), R⁴⁹ and R⁵⁰ are each as defined above for R⁴¹ and R⁴² in general formula (12), R⁵¹ and R⁵² are each as defined above for R⁴⁵ in general formula (12), and q and q' each represent an integer of 1 or 2.

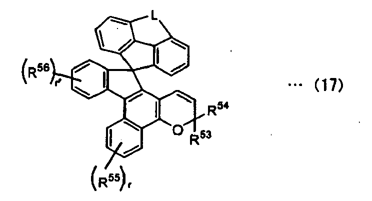

In the above general formula (17), R⁵³ and R⁵⁴ are each as defined above for R⁴¹ and R⁴² in general formula (12), R⁵⁵ and R⁵⁶ are each as defined above for R⁴⁵ in general formula (12), L represents one of the groups represented by the following general formulae:

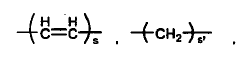

(̵P)̵, -P-R⁵⁷-P-.

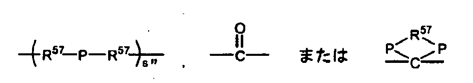

wherein P represents oxygen atom or sulfur atom, R⁵⁷ represents an alkylene group having 1 to 6 carbon atoms, and s, s' and s" each represent an integer of 1 to 4; and r and r' each independently represent 1 or 2.

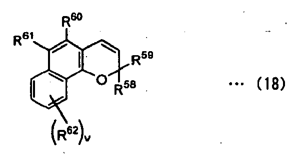

In the above general formula (18), R⁵⁸ and R⁵⁹ are each as defined above for R⁴¹ and R⁴² in general formula (12), R⁶⁰, R⁶¹ and R⁶² are each as defined above for R⁴⁵ in general formula (12), and v represents an integer of 1 or 2.

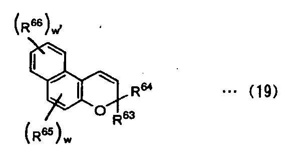

In the above general formula (19), R⁶³ and R⁶⁴ are each as defined above for R⁴¹ and R⁴² in general formula (12), R⁶⁵ and R⁶⁶ are each as defined above for R⁴⁵ in general formula (12), and w and w' each independently represent 1 or 2.

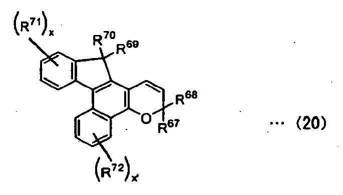

In the above general formula (20), R⁶⁷ and R⁶⁸ are each as defined above for R⁴¹ and R⁴² in general formula (12), R⁶⁹, R⁷⁰, R⁷¹ and R⁷² are each as defined above for R⁴⁵ in general formula (12), and x and x' each independently represent 1 or 2.

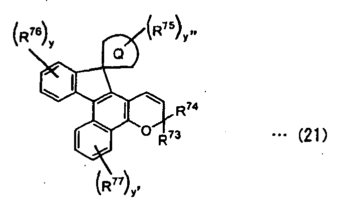

In the above general formula (21), R⁷³ and R⁷⁴ are each as defined above for R⁴¹ and R⁴² in general formula (12), R⁷⁵, R⁷⁶ and R⁷⁷ are each as defined above for R⁴⁵ in general formula (12), the group represented by the following general formula: 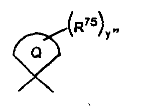 is an aliphatic hydrocarbon ring which may have at least one substituent, and y, y' and y" each independently represent 1 or 2.

Among the chromene compounds represented by general formulae (16) to (21), chromene compounds having the following structures are preferable.

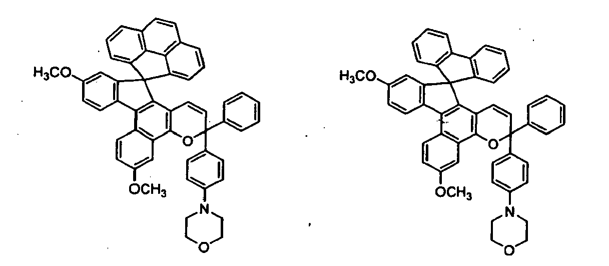

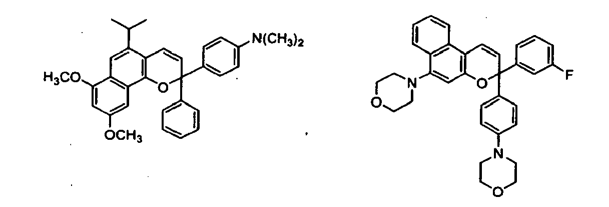

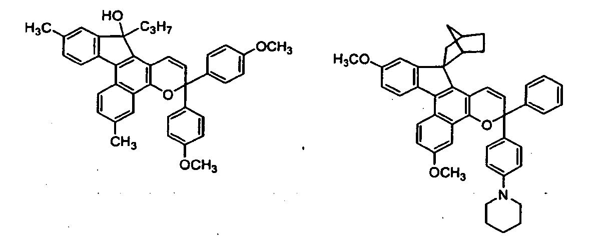

A plurality of chromene compounds may be suitably mixed and used so that a suitable tone of the developed color is obtained. The content of the photochromic compound of component (5) in the entire hardenable composition is, in general, 0.01 to 20 parts by weight and preferably 0.1 to 10 parts by weight based on 100 parts by weight of the radical polymerizable monomer.

The hardenable composition of the present invention comprises a photopolymerization initiator as component (6). The photopolymerization initiator used in the present invention is not particularly limited. Examples of the photopolymerization initiator include benzoin, benzoin methyl ether, benzoin butyl ether, benzophenol, acetophenone, 4,4'-dichlorobenzophenone, diethoxyacetophenone, 2-hydroxy-2-methyl-1-phenylpropan-1-one, benzyl methyl ketal, 1-(4-isopropylphenyl)-2-hydroxy-2-methylpropan-1-one, 1-hydroxycyclohexyl phenyl ketone, 2-isopropylthioxanthone, bis(2,6-dimethoxybenzoyl)-2,4,4-trimethylpentylphosphine oxide, bis(2,4,6-trimethylbenzoyl)phenylphosphine oxide, 2,4,6-trimethylbenzoyldiphenylphosphine oxide, 2-benzyl-2-dimethylamino-1-(4-morpholino)butanone-1. Among the above compounds, 1-hydroxycyclohexyl phenyl ketone, 2-isopropylthioxanthone, bis(2,6-dimethoxybenzoyl-2,4,4-trimethylpentylphosphine oxide, bis(2,4,6-trimethylbenzoyl)phenylphosphine oxide and 2,4,6-trimethylbenzoyldiphenylphosphine oxide are preferable.

The photopolymerization initiator may be used as a suitable mixture of a plurality of the initiators. The content of the photopolymerization initiator of component (6) in the entire hardenable composition is, in general, 0.001 to 5 parts by weight and preferably 0.1 to 1 part by weight based on 100 parts by weight of the radical polymerizable monomer.

When the hardenable composition of the present invention is hardened in accordance with a method other than the photopolymerization, a thermal polymerization initiator may be used. Examples of the thermal polymerization initiator include diacyl peroxides such as benzoyl peroxide, p-chlorobenzoyl peroxide, decanoyl peroxide and lauroyl peroxide and acetyl peroxide; peroxyesters such as t-butyl peroxy-2-ethylhexanoate, t-butyl peroxydicarbonate, cumyl peroxyneodecanate and t-butyl peroxybenzoate; percarbonates such as diisopropyl peroxydicarbonate, di-2-ethylhexyl peroxydicarbonate and di-sec-butyl oxycarbonate; and azo compounds such as 2,2'-azobisisobutyronitrile, 2,2'-azobis(4-dimethylvaleronitrile), 2,2'-azobis(2-methylbutyronitrile) and 1,1'-azobis(cyclohexane-1-carbonitrile).

The content of the thermal polymerization initiator is, in general, 0.01 to 10 parts by weight based on 100 parts by weight of the entire polymerizable monomer although the content is different depending on the conditions of the polymerization, the type of the initiator and the type and the composition of the polymerizable monomer. The thermal polymerization initiator may be used singly or in combination of two or more.

The hardenable composition of the present invention may further comprise additives such as surfactants, antioxidants, radical scavengers, ultraviolet light stabilizers, ultraviolet light absorbents, mold releases, anticoloring agents, antistatic agents, fluorescent dyes, dyes, pigments, perfumes and plasticizers for improving the durability, the rate of color development, the rate of discoloration and the molding property of the photochromic compound. As the additives, conventional compounds can be used without any restrictions.

As the surfactant, any of nonionic surfactants, anionic surfactants and cationic surfactants can be used. It is preferable that a nonionic surfactant is used from the standpoint of the solubility into the polymerizable monomer. Examples of the preferable nonionic surfactant include sorbitan esters of fatty acids, glycerol esters of fatty acids, decaglycerol esters of fatty acids, propylene glycol pentaerythritol esters of fatty acids, polyoxyethylene sorbitan esters of fatty acids, polyoxyethylene sorbit esters of fatty acids, polyoxyethylene glycerol esters of fatty acids, polyethylene glycol esters of fatty acids, polyoxyethylene alkyl ethers, polyoxyethylene phytosterol phytostanol, polyoxyethylene polyoxypropylene alkyl ethers, polyoxyethylene alkylphenyl ethers, polyoxyethylene castor oil hardened castor oil, polyoxyethylene lanoline lanoline alcohol beeswax derivatives, polyoxyethylene alkylamine fatty acid amides, polyoxyethylene alkylphenyl formaldehyde condensates and single chain polyoxyethylene alkyl ethers. When the surfactant is used, the surfactant may be used as a mixture of two or more. It is preferable that the content of the surfactant is in the range of 0.1 to 20 parts by weight based on 100 parts by weight of the polymerizable monomer.

As the antioxidant, the radical scavenger, the ultraviolet light stabilizer and the ultraviolet light absorbent, hindered amine light stabilizers, hindered phenol antioxidants, phenol-based radical scavengers, sulfur-based antioxidants, benzotriazole-based compounds and benzophenone-based compounds can be preferably used. The antioxidants, the radical scavengers, the ultraviolet light stabilizers and the ultraviolet light absorbents may be used as a mixture of two or more. When the above non-polymerizable compounds are used, the surfactant may be used in combination with the antioxidant, the radical scavenger, the ultraviolet light stabilizer and the ultraviolet light absorbent. It is preferable that the contents of the antioxidant, the radical scavenger, the ultraviolet light stabilizer and the ultraviolet light absorbent are in the range of 0.001 to 20 parts by weight based on 100 parts by weight of the entire polymerizable monomer.

When the hardenable composition of the present invention is used for coating, hindered amine light stabilizers are useful among the stabilizers described above from the standpoint of the prevention of degradation of the photochromic compound during hardening of the hardenable composition of the present invention and the improvement in the durability of the hardened product. As the hindered amine light stabilizer, conventional compounds can be used without any restrictions as long as the compound is the hindered amine compound which is defined above as the compound which does not exhibit the function required for the amine compound of the present invention. Examples of the compound exhibiting the effect of preventing degradation of the photochromic compound when the compound is used for coating include bis(1,2,2,6,6-pentamethyl-4-piperidyl) sebacate and ADEKASTAB LA-52, LA-62 and LA-82 manufactured by ASAHI DENKA KOGYO Co., Ltd., among the above compounds. The content is in the range of 0.001 to 20 parts by weight based on 100 parts by weight of the entire polymerizable monomer. When the above compound is used for coating, it is preferable that the content is in the range of 0.1 to 10 parts by weight and preferably in the range of 1 to 10 parts by weight.

It is preferable that the hardenable composition of the present invention comprises surfactants, leveling agents and the like so that the uniformity is improve when the film is formed. It is more preferable that a silicone-based leveling agent or a fluorine-based leveling agent exhibiting the excellent leveling property is used. The content is not particularly limited. The content is, in general, 0.01 to 1.0% by weight and preferably 0.05 to 0.5% by weight based on the amount of the entire hardenable composition.

The process for preparing the hardenable composition of the present invention is not particularly limited. The hardenable composition can be prepared by weighing prescribed amounts of the components and mixing the weighed components. The order of addition of the components is not particularly limited. The entire components may be added simultaneously or, after the monomer components are mixed in advance, the photochromic compound and other additives may be added and mixed immediately before the polymerization.

It is preferable that the hardenable composition of the present invention has a viscosity of 20 to 500 cp, more preferably 50 to 300 cp and most preferably 60 to 200 cp at 25°C.

When the viscosity is adjusted in the above range, the thickness of the photochromic coating layer described below can be easily adjusted at a relatively great value, i.e., in the range of 10 to 100 µm, so that the photochromic properties can be sufficiently exhibited.

The optical member of the present invention will be described in the following.

The optical member of the present invention comprises a photochromic coating layer formed by coating an optical substrate with the hardenable composition, followed by hardening the hardenable composition.

As the optical substrate used in the optical member of the present invention, a synthetic resin substrate is used. Examples of the synthetic resin substrate include substrates made of a copolymer of methyl methacrylate and one or more other monomers, copolymers of diethylene glycol bisallyl carbonate and one or more other monomers, polycarbonates, polystyrene, polyvinyl chloride, unsaturated polyesters, polyethylene terephthalate, polyurethanes, polythiourethanes, sulfide resins utilizing the ene-thiol reaction and vinyl polymers having sulfur atom. However, the synthetic resin substrate is not limited to the substrates described above.

It is preferable that the optical substrate used for the optical member of the present invention is a plastic lens substrate and more preferably a plastic lens substrate for spectacles.

As the process for coating the optical substrate with the hardenable composition of the present invention, a conventional process such as the dip coating process, the spin coating process and the spray coating process can be used. The spin coating process is preferable from the standpoint of the viscosity of the composition and the precision of the formed surface.

Adhesion between the optical substrate and the photochromic coating layer can be improved by conducting a treatment such as a chemical treatment with an acid, an alkali or various types of organic solvents, a physical treatment with plasma, ultraviolet light or ozone and a treatment with a cleaning agent using various types of cleaning agents before the optical substrate is coated with the hardenable composition.

The process for obtaining the photochromic layer by hardening the hardenable composition of the present invention is not particularly limited, and a conventional polymerization process can be used in accordance with the type of the used radical polymerizable monomer. As the means for initiating the polymerization, application of heat, irradiation of ultraviolet light, α-ray, β-ray or γ-ray or a combination of these means can be used. It is preferable that the hardening is conducted by irradiation with ultraviolet light, followed by further hardening by heating.

As the light source for hardening with ultraviolet light, a conventional light source can be used without any restrictions. Examples of the light source include ultra-high voltage mercury lamps, high voltage mercury lamps, low voltage mercury lamps, xenon lamps, carbon arcs, sterilizing lamps and electrodeless discharge lamps.

The time of irradiation with light can be decided in accordance with the type of the photopolymerization initiator with ultraviolet light, the wave length of absorption, the sensitivity and the desired thickness of the photochromic coating layer.

In the present invention, it is preferable that the thickness of the photochromic coating layer is 10 to 100 µm and more preferably 20 to 50 µm when the density of the developed color, the durability, the heat resistance and the uniformity of the film are considered.

It is preferable that a hard coat layer is formed on the photochromic coating layer. It is more preferable that an antireflection layer is formed on the hard coat layer.

The material for the hard coat layer is not particularly limited, and a conventional coating composition comprising organosilicon compounds and colloid particles of a metal oxide can be used.

As the organosilicon compound, for example, organosilicon compounds represented by the following general formula (III):

(R⁹¹)_{a'}(R⁹³)_{b'}Si(OR⁹²)_{4-(a'+b'}) (III)

and hydrolysis products thereof can be used.

In general formula (III), R⁹¹ represents an organic group having glycidoxy group, epoxy group, vinyl group, methacryloxy group, acryloxy group, mercapto group, amino group or phenyl group, R⁹² represents an alkyl group having 1 to 4 carbon atoms, an acyl group having 1 to 4 carbon atoms or an aryl group having 6 to 10 carbon atoms, R⁹³ represents an alkyl group having 1 to 6 carbon atoms or an aryl group having 6 to 10 carbon atoms, and a' and b' each represent an integer of 0 or 1.

Examples of the alkyl group having 1 to 4 carbon atoms which is represented by R⁹² include linear and branched methyl group, ethyl group, propyl groups and butyl groups.

Examples of the acyl group having 1 to 4 carbon atoms which is represented by R⁹² include acetyl group, propionyl group, oleyl group and benzoyl group.

Examples of the aryl group having 6 to 10 carbon atoms which is represented by R⁹² include phenyl group, xylyl group and tolyl group.

Examples of the alkyl group having 1 to 4 carbon atoms which is represented by R⁹³ include linear and branched methyl group, ethyl group, propyl groups, butyl groups, pentyl groups and hexyl groups.

Examples of the aryl group having 6 to 10 carbon atoms which is represented by R⁹³ include phenyl group, xylyl group and tolyl group.

Examples of the compound represented by general formula (III) include methyl silicate, ethyl silicate, n-propyl silicate, i-propyl silicate, n-butyl silicate, sec-butyl silicate, t-butyl silicate, tetraacetoxysilane, methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenetyloxysilane, glycidoxymethyltrimethoxysilane, glycidoxymethyltriethoxysilane, α-glycidoxyethyltriethoxysilane, β-glycidoxylethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3.4-epxoycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glylcidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropylethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane and methylvinyldiethoxysilane.

Examples of the colloid particles of a metal oxide include colloid particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO) and antimony oxide (Sb₂O₃). The colloid particles may be used singly or in combination of two or more.

The material and the process for forming the antireflection film are not particularly limited, and a conventional single-layer or multi-layer film comprising an inorganic oxide can be used.

Examples of the inorganic oxide include silicon dioxide (SiO2), zirconium oxide (ZrO₂), aluminum oxide (Al₂O₃), niobium oxide (Nb₂O₃) and yttrium oxide (Y₂O₃).

### EXAMPLES

The present invention will be described more specifically with reference to examples in the following. However, the present invention is not limited to the examples. The physical properties were measured in accordance with the methods described in the following. ,

The physical properties of optical members in Examples and Comparative Examples were measured in accordance with the test methods described in the following.

### (1) Test of scratch resistance

The surface of a plastic lens was rubbed with steel wool (the grade #0000; manufactured by NIHON STEEL WOOL Co., Ltd.) under 1 kgf/cm², and resistance to formation of scratches was evaluated by visual observation. The criterion for the evaluation was as follows:
A Almost no scratches formed even under strong rubbing
B Considerable scratches formed under strong rubbing
C Scratches formed in the same degree as those on the plastic substrate

### (2) Test of adhesive property

Perpendicular cut lines were drawn on a hardened coating film so that 100 square pieces having edges of 1 mm were formed. A pressure sensitive adhesive tape (the trade name: CELLOTAPE; manufactured by NICHIBAN Co., Ltd.) was tightly attached to the hardened coating film having the cut lines and then rapidly peeled off. The number of the piece of the hardened coating film remaining without being cleaved with the pressure sensitive adhesive tape was counted. When the entire pieces of the hardened coating film remained without being cleaved, the result was expressed as 100/100 and, when no pieces remained without being cleaved, the result was expressed as 0/100.

### (3) Appearance

The appearance was evaluated by visual observation under a fluorescent light in a dark room. When cloudiness was not found, the result was evaluated as good.

### Example 1

### (i) Preparation of a photochromic coating fluid

In a plastic vessel, 3 parts by weight of chromene 1 shown below as the photochromic coloring agent, 5 parts by weight of LS765 (bis(1,2,2,6,6-pentamethyl-4-piperidyl) sebacate and methyl (1,2,2,6,6-pentamethyl-4-piperidyl) sebacate) as the antioxidant and, as the polymerization initiators with ultraviolet light, 0.4 parts by weight of CGI-184 (1-hydroxycyclohexyl phenyl ketone) and 0.1 parts by weight of CGI403 (bis(2,6-dimethoxybenzoyl)-2,4,4-trimethylpentylphosphine oxide) were added to 100 parts by weight of a radical polymerizable monomer containing 20 parts by weight of trimethylolpropane trimethacrylate, 35 parts by weight of BPE oligomer (2,2-bis(4-methacryloyloxypolyethoxyphenyl)propane), 10 parts by weight of EB6A (polyester oligomer hexaacrylate), 10 parts by weight of polyethylene glycol diacrylate having an average molecular weight of 532 and 10 parts by weight of glycidyl methacrylate, and the obtained mixture was sufficiently mixed by stirring. To the obtained composition, 4.8 parts by weight of γ-glycidoxypropyltrimethoxysilane as the organosilicon compound having epoxy group and 1.6 parts by weight of γ-methacryloyloxypropyltrimethoxysilane as the organosilicon compound having a radical polymerizable functional group were added dropwise under stirring. After the resultant mixture was sufficiently stirred, 1.4 parts by weight of N-methyldiethanolamine was weighed and added dropwise, and the resultant mixture was sufficiently mixed by stirring. Then, 0.1 part by weight of a silicone-based leveling agent Y-7006 (polyoxyalkylene dimethylpolysiloxane copolymer; manufactured by NIPPON UNICAR Co., Ltd.) was added and mixed. The obtained mixture was defoamed by an agitation/deaeration apparatus which revolves and rotates at the same time (AR-250; manufactured by THINKY Co., Ltd.) for 2 minutes, and a hardenable composition exhibiting the photochromic property was obtained.

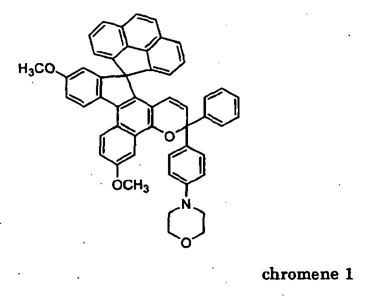

### (ii) Formation of a photochromic coating layer

After a polythiourethane lens substrate (manufactured by HOYA Co., Ltd.; the trade name: EYAS; the thickness at the center: 2.0 mm) as the plastic lens substrate was treated by dipping into a 10% by weight aqueous solution of sodium hydroxide for 5 minutes, washed sufficiently with pure water and dried, the convex side of the substrate was coated with the hardenable composition prepared in (i) in accordance with the spin coating process. The lens obtained by the above treatment was irradiated with ultraviolet light having a wave length of 405 nm emitted from an UV lamp manufactured by FUSION Company (D bulb) with an accumulated amount of light of 1800 mJ/cm² (100 mW/cm², for 3 minutes) under an atmosphere of nitrogen (the concentration of oxygen: 500 ppm or smaller). The irradiated lens was then treated by hardening at 110°C for 60 minutes, and a plastic lens having a photochromic coating layer was obtained.

### (iii) Preparation of a hard coating fluid

Into a glass vessel equipped with a magnetic stirrer, 141 parts by weight of colloidal silica dispersed in water (the solid content: 40% by weight; the average particle diameter: 15 millimicron) was placed. While the colloidal silica was stirred, 30 parts by weight of acetic acid was added, and the resultant mixture was sufficiently mixed by stirring. Then, 74 parts by weight of γ-glycidoxypropyltrimethoxysilane was added dropwise, and the obtained mixture was stirred at 5°C for 24 hours. To the resultant mixture, 100 parts by weight of propylene glycol monomethyl ether, 150 parts by weight of isopropyl alcohol, 0.2 parts by weight of a silicone-based surfactant and 7.5 parts by weight of aluminum acetylacetonate as the hardening agent were added. The obtained mixture was sufficiently mixed by stirring and then filtered, and a hard coating fluid was prepared.

### (iv) Formation of a hard coat layer

The plastic lens having the photochromic coating layer obtained in (ii) was treated by dipping into a 10% aqueous solution of sodium hydroxide at 60°C for 5 minutes, washed sufficiently with pure water and dried. Using the treated plastic lens, the coating was conducted using the hard coating fluid prepared in (iii) in accordance with the dip coating process (the pulling up speed: 20 cm/minute). The coating layer formed on the plastic lens was hardening by heating at 110°C for 60 minutes, and a hard coat layer was formed. The results of evaluation of the obtained plastic lens having the hard coat layer in accordance with methods (1) to (3) are shown in Table 1.

### (v) Formation of an antireflection film

An antireflection film was formed on the plastic lens having the hard coat layer obtained above in (iv) as shown in the following. The plastic lens having the hard coat layer was placed into a vapor deposition apparatus. The apparatus was heated at 85°C while the apparatus was evacuated. After the apparatus was evacuated to 2.67×10⁻³ Pa, materials were vapor deposited in accordance with the electron beam heating method, and an antireflection film having a laminate structure of SiO₂ and ZrO₂ was formed (λ/4-λ/2-λ/4; λ: the wavelength). The results of evaluation of the obtained plastic lens having the hard coat layer and the antireflection film in accordance with methods (1) and (2) are shown in Table 1.

### Example 2

In accordance with the same procedures as those conducted in Example 1 except that, in (i) the preparation of the photochromic coating fluid, γ-glycidoxypropyltriethoxysilane was used as the organosilicon compound having epoxy group in place of γ-glycidoxypropyltrimethoxysilane, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Example 3

In accordance with the same procedures as those conducted in Example 1 except that, in (i) the preparation of the photochromic coating fluid, γ-glycidoxypropylmethyldiethoxysilane was used as the organosilicon compound having epoxy group in place of γ-glycidoxypropyltrimethoxysilane, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Example 4

In accordance with the same procedures as those conducted in Example 1 except that, in (ii) the preparation of the photochromic coating layer, a diethylene glycol bisallyl carbonate lens substrate (manufactured by HOYA Co., Ltd.; the trade name: HL; the thickness at the center: 2.0 mm) was used as the plastic lens substrate in place of the polythiourethane lens substrate, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Example 5

In accordance with the same procedures as those conducted in Example 1 except that, in (ii) the preparation of the photochromic coating layer, a polyurea lens substrate (manufactured by HOYA Co., Ltd.; the trade name: PHOENIX; the thickness at the center: 2.0 mm) was used as the plastic lens substrate in place of the polythiourethane lens substrate, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Example 6

In accordance with the same procedures as those conducted in Example 1 except that, in (ii) the preparation of the photochromic coating layer, a polythiourethane lens substrate (manufactured by HOYA Co., Ltd.; the trade name: EYNOA; the thickness at the center: 2.0 mm) was used as the plastic lens substrate in place of the polythiourethane lens substrate used in Example 1, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Comparative Example 1

In accordance with the same procedures as those conducted in Example 1 except that, in (i) the preparation of the photochromic coating fluid, 6.4 parts by weight of γ-methacryoyloxypropyltrimethoxysilane as the organosilicon compound having a radical polymerizable functional group alone was used in place of 4.8 parts by weight of γ-glycidoxypropyltrimethoxysilane as the organosilicon compound having epoxy group and 1.6 parts by weight of γ-methyacryloyloxypropyltrimethoxysilane as the organosilicon compound having a polymerizable functional group, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Comparative Example 2

In accordance with the same procedures as those conducted in Example 1 except that, in (i) the preparation of the photochromic coating fluid, none of γ-glycidoxypropyltrimethoxysilane and γ-methacryloyloxypropyltrimethoxysilane were used as the organosilicon compound, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Comparative Example 3

In accordance with the same procedures as those conducted in Comparative Example 1 except that, in (ii) the preparation of the photochromic coating layer, a diethylene glycol bisallyl carbonate lens substrate (manufactured by HOYA Co., Ltd.; the trade name: HL; the thickness at the center: 2.0 mm) was used as the plastic lens substrate in place of the polythiourethane lens substrate, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Comparative Example 4

In accordance with the same procedures as those conducted in Comparative Example 1 except that, in (ii) the preparation of the photochromic coating layer, a polyurea lens substrate (manufactured by HOYA Co., Ltd.; the trade name: PHOENIX; the thickness at the center: 2.0 mm) was used as the plastic lens substrate in place of the polythiourethane lens substrate, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

### Comparative Example 5

In accordance with the same procedures as those conducted in Comparative Example 1 except that, in (ii) the preparation of the photochromic coating layer, a polythiourethane lens substrate (manufactured by HOYA Co., Ltd.; the trade name: EYNOA; the thickness at the center: 2.0 mm) was used as the plastic lens substrate in place of the polythiourethane lens substrate used in Example 1, a plastic lens having a hard coat layer was prepared and evaluated in accordance with methods (1) to (3) and, then, a plastic lens having a hard coat layer and an antireflection film was prepared and evaluated in accordance with methods (1) and (2). The results are shown in Table 1.

**Table 1-1**

| | Plastic lens substrate | Organosilicon compound having epoxy group | Organosilicon compound having polymerizable functional group |
|---|---|---|---|
| Example 1 | EYAS | γ-glycidoxypropyl-trimethoxysilane | γ-methacryloyloxy-propyltrimethoxy silane |
| Example 2 | EYAS | γ-glycidoxypropyl-triethoxysilane | γ-methacryloyloxy-propyltrimethoxy silane |
| Example 3 | EYAS | γ-glycidoxypropyl-methyldiethoxysilane | γ-methacryloyloxy-propyltrimethoxysilane |
| Example 4 | HL | γ-glycidoxypropyl-trimethoxysilane | γ-methacryloyloxy-propyltrimethoxysilane |
| Example 5 | PHOENIX | γ-glycidoxypropyl-trimethoxysilane | γ-methacryloyloxy-propyltrimethoxysilane |
| Example 6 | EYNOA | γ-glycidoxypropyl-trimethoxysilane | γ-methacryloyloxy-propyltrimethoxysilane |
| Comparative Example 1 | EYAS | - | γ-methacryloyloxy-propyltrimethoxysilane |
| Comparative Example 2 | EYAS | - | - |
| Comparative Example 3 | HL | - | γ-methacryloyloxy-propyltrimethoxysilane |
| Comparative Example 4 | PHOENIX | - | γ-methacryloyloxy-propyltrimethoxysilane |
| Comparative Example 5 | EYNOA | - | γ-methacryloyloxy-propyltrimethoxysilane |

**Table 1-2**

| | Lens having hard coating layer | | | Lens having hard coating layer and antireflection film | |
|---|---|---|---|---|---|
| | scratch resistance | adhesion | appearance | scratch resistance | adhesion |
| Example 1 | A | 100/100 | good | A | 100/100 |
| Example 2 | A | 100/100 | good | A | 100/100 |
| Example 3 | A | 100/100 | good | A | 100/100 |
| Example 4 | A | 100/100 | good | A | 100/100 |
| Example 5. | A | 100/100 | good | A | 100/100 |
| Example 6 | A | 100/100 | good | A | 100/100 |
| Comparative Example 1 | A | 50/100 | good | A | 50/100 |
| Comparative Example 2 | A | 0/100 | good | A | 0/100 |
| Comparative Example 3 | A | 50/100 | good | A | 50/100 |
| Comparative Example 4 | A | 50/100 | good | A | 50/100 |
| Comparative Example 5 | A | 50/100 | good | A | 50/100 |

As shown in Table 1, the photochromic coating layers of the plastic lenses prepared in Examples 1 to 6 which contained components (1) to (6) exhibited excellent adhesion with the plastic lens substrate. In contrast, the photochromic coating layers of the plastic lenses prepared in Comparative Examples 1 to 5 in which no organosilicon compound having epoxy group was used exhibited inferior adhesion with the plastic lens substrate.

### INDUSTRIAL APPLICABILITY

The optical member of the present invention comprises a photochromic coating layer, and this coating layer exhibits excellent adhesion with the optical substrate and strength of the film. The hardenable composition of the present invention is suitable as the composition used as the material for the photochromic coating layer exhibiting excellent adhesion with the optical substrate and strength of the film.

## Claims

1. A hardenable composition which comprises following components:
(1) a radical polymerizable monomer,
(2) an organosilicon compound having epoxy group at one end,
(3) an organosilicon compound having a radical polymerizable functional group at one end,
(4) an amine compound,
(5) a photochromic compound and
(6) a photopolymerization initiator,
wherein (2) the organosilicon compound having epoxy group at one end is a compound having silanol group or a compound having a group which forms silanol group by hydrolysis, and (3) the organosilicon compound having a radical polymerizable functional group at one end is a compound having silanol group or a compound having a group which forms silanol group by hydrolysis.

2. A hardenable composition according to Claim 1, which comprises:
1.0 to 15 parts by weight of (2) the organosilicon compound having epoxy group at one end,
1.0 to 15 parts by weight of (3) the organosilicon compound having a radical polymerizable functional group at one end,
0.01 to 20 parts by weight of (4) the amine compound,
0.01 to 20 parts by weight of (5) the photochromic compound and
0.01 to 5 parts by weight of (6) the photopolymerization initiator based on 100 parts by weight of (1) the radical polymerizable monomer.

3. A hardenable composition according to any one of Claims 1 and 2, wherein (1) the radical polymerizable monomer has at least one radical polymerizable group selected from acryloyl group, methacryloyl group, acryloyloxy group, methacryloyloxy group, vinyl group, allyl group and styryl group.

4. A hardenable composition according to any one of Claims 1 and 2, wherein (1) the radical polymerizable monomer has at least one radical polymerizable group selected from acryloyl group, methacryloyl group, acryloyloxy group and methacryloyloxy group.

5. A hardenable composition according to any one of Claims 1 and 2, wherein (2) the organosilicon compound having epoxy group at one end is an organosilicon compound represented by following general formula **(I):**
(R⁸¹)ₐ(R⁸³)_{b}Si(OR⁸²)_{4-(a+b)} (I)
wherein R⁸¹ represents an organic group having epoxy group, R⁸² represents an alkyl group having 1 to 4 carbon atoms, an acyl group having 1 to 4 carbon atoms or an aryl group having 6 to 10 carbon atoms, R⁸³ represents an alkyl group having 1 to 6 carbon atoms or an aryl group having 6 to 10 carbon atoms, a represents an integer of 1, and b represents an integer of 0 or 1; or a hydrolysis product thereof.

6. A hardenable composition according to Claim 5, wherein the organic group having epoxy group represented by R⁸¹ is epoxy group, glycidoxy group or 3,4-epoxycyclohexyl group.

7. A hardenable composition according to any one of Claims 1 and 2, wherein (3) the organosilicon compound having a radical polymerizable functional group at one end is an organosilicon compound represented by following general formula (II):
(R⁸⁴)_{c}(R⁸⁶)_{d}Si(OR⁸⁵)_{4-(c+d)} (II)
wherein R⁸⁴ represents an organic group having a radical polymerizable functional group, R⁸⁵ represents an alkyl group having 1 to 4 carbon atoms, an acyl group having 1 to 4 carbon atoms or an aryl group having 6 to 10 carbon atoms, R⁸⁶ represents an alkyl group having 1 to 6 carbon atoms or an aryl group having 6 to 10 carbon atoms, c represents an integer of 1, and d represents an integer of 0 or 1; or a hydrolysis product thereof.

8. A hardenable composition according to Claim 7, wherein the organic group having a radical polymerizable group represented by R⁸⁴ is acryloyl group, methacryloyl group, acryloyloxy group, methacryloyloxy group, vinyl group, allyl group or styryl group.

9. A hardenable composition according to any one of Claims 1 and 2, wherein (4) the amine compound is at least one compound selected from non-polymerizable low molecular weight amine compounds including triethanolamine, N-methyldiethanolamine, triisopropanolamine, 4,4-dimethylaminobenzophenone and diazabicyclooctane, amine compounds having a polymerizable group including N,N-dimethylaminoethyl methacrylate and N,N-diethylaminoethyl methacrylate and amine compounds having silyl group including n-(hydroxyethyl)-N-methylaminopropyltrimethoxysilane, dimethoxyphenyl-2-piperidinoethoxysilane, N,N-diethylaminomethyltrimethoxysilane and (N,N-diethyl-3-aminopropyl)trimethoxysilane.

10. An optical member which comprises a photochromic coating layer formed by coating an optical substrate with the hardenable composition described in any one of Claims 1 and 2 and hardening the hardenable composition.

11. An optical member according to Claim 10, wherein a hard coat layer is formed on the photochromic coating layer.

12. An optical member according to Claim 11, wherein an antireflection layer is formed on the hard coat layer.

13. An optical member according to Claim 10, wherein the optical substrate is a plastic lens substrate.

## Patentansprüche

1. Härtbare Zusammensetzung, die folgende Komponenten umfasst:
(1) ein radikalisch polymerisierbares Monomer,
(2) eine Organosilikonverbindung mit einer Epoxygruppe an einem Ende
(3) eine Organosilikonverbindung mit einer radikalisch polymerisierbaren funktionellen Gruppe an einem Ende
(4) eine Aminverbindung
(5) eine photochrome Verbindung und
(6) einen Photopolymerisationsinitiator,
wobei (2) die Organosilikonverbindung mit einer Epoxygruppe an einem Ende eine Verbindung mit einer Silanolgruppe ist oder eine Verbindung mit einer Gruppe, welche eine Silanolgruppe durch Hydrolyse bildet, ist, und (3) die Organosilikonverbindung mit einer radikalisch polymerisierbaren funktionellen Gruppe an einem Ende eine Verbindung mit einer Silanolgruppe oder eine Verbindung mit einer Gruppe, welche eine Silanolgruppe durch Hydrolyse bildet, ist.

2. Härtbare Zusammensetzung gemäß Anspruch 1, welche umfasst:
1,0 bis 15 Gewichtsteile (2) der Organosilikonverbindung mit einer Epoxygruppe an einem Ende,
1,0 bis 15 Gewichtsteile (3) der Organosilikonverbindung mit einer radikalisch polymerisierbaren funktionellen Gruppe an einem Ende,
0,01 bis 20 Gewichtsteile (4) der Aminverbindung,
0,01 bis 20 Gewichtsteile (5) der photochromen Verbindung und
0,01 bis 5 Gewichtsteile (6) des Photopolymerisationsinitiators, bezogen auf 100 Gewichtsteile (1) des radikalisch polymerisierbaren Monomers.

3. Härtbare Zusammensetzung gemäß einem beliebigen der Ansprüche 1 und 2, wobei (1) das radikalisch polymerisierbare Monomer mindestens eine radikalisch polymerisierbare Gruppe umfasst, ausgewählt aus einer Acryloylgruppe, einer Methacryloylgruppe, einer Acryloyloxygruppe, einer Methacryloyloxygruppe, einer Vinylgruppe, einer Allylgruppe und einer Styrylgruppe.

4. Härtbare Zusammensetzung gemäß einem beliebigen der Ansprüche 1 und 2, wobei (1) das radikalisch polymerisierbare Monomer mindestens eine radikalisch polymerisierbare Gruppe besitzt, ausgewählt aus einer Acryloylgruppe, einer Methacryloylgruppe, einer Acryloyloxygruppe und einer Methacryloyloxygruppe.

5. Härtbare Zusammensetzung gemäß einem beliebigen der Ansprüche 1 und 2, wobei (2) die Organosilikonverbindung mit einer Epoxygruppe an einem Ende eine Silikonverbindung ist, dargestellt durch die folgende allgemeine Formel (I):
(R⁸¹)ₐ(R⁸³)_{b}Si(OR⁸²)_{4-(a+b)} (I)
wobei R⁸¹ eine organische Gruppe mit einer Epoxygruppe darstellt, R⁸² eine Aklylgruppe mit 1 bis 4 Kohlenstoffatomen, eine Acylgruppe mit 1 bis 4 Kohlenstoffatomen oder eine Arylgruppe mit 6 bis 10 Kohlenstoffatomen darstellt, R⁸³ eine Alkylgruppe mit 1 bis 6 Kohlenstoffatomen oder eine Arylgruppe mit 6 bis 10 Kohlenstoffatomen darstellt, a die ganze Zahl 1 und b die ganze Zahl 0 oder 1 darstellt; oder eine Hydrolyseprodukt davon.

6. Härtbare Zusammensetzung gemäß Anspruch 5, wobei die organische Gruppe mit einer Epoxygruppe, dargestellt durch R⁸¹, eine Epoxygruppe ist, eine Glycidoxygruppe oder eine 3,4-Epoxycyclohexylgruppe.

7. Härtbare Zusammensetzung gemäß einem beliebigen der Ansprüche 1 und 2, wobei (3) die Organosilikonverbindung mit einer radikalisch polymerisierbaren funktionellen Gruppe an einem Ende eine Silikonverbindung ist, dargestellt durch dir folgende Formel (II):
(R⁸⁴)_{c}(R⁸⁶)_{d}Si(OR⁸⁵)_{4-(c+d)} (II)
wobei R⁸⁴ eine organische Gruppe mit einer radikalisch polymerisierbaren funktionellen Gruppe darstellt, R⁸⁵ eine Aklylgruppe mit 1 bis 4 Kohlenstoffatomen, eine Acylgruppe mit 1 bis 4 Kohlenstoffatomen oder eine Arylgruppe mit 6 bis 10 Kohlenstoffatomen darstellt, R⁸⁶ eine Alkylgruppe mit 1 bis 6 Kohlenstoffatomen oder eine Arylgruppe mit 6 bis 10 Kohlenstoffatomen darstellt, c die ganze Zahl 1 und d die ganze Zahl 0 oder 1 darstellt; oder eine Hydrolyseprodukt davon.

8. Härtbare Zusammensetzung gemäß Anspruch 7, wobei die organische Gruppe mit einer radikalisch polymerisierbaren Gruppe, dargestellt durch R⁸⁴, eine Acryloylgruppe, eine Methacryloylgruppe, eine Acryloyloxygruppe, eine Methacryloyloxygruppe, eine Vinylgruppe, eine Allylgruppe oder eine Styrylgruppe ist.

9. Härtbare Zusammensetzung gemäß einem beliebigen der Ansprüche 1 und 2, wobei (4) die Aminverbindung mindestens eine Verbindung ist, ausgewählt aus einer nicht polymerisierbaren Aminverbindung mit niedrigem Molekulargewicht, einschließlich Triethanolamin, N-Methyldiethanolamin, Triisopropanolamin, 4,4-Dimethylaminobenzophenon und Diazabicyclooctan, Aminverbindungen mit einer polymerisierbaren Gruppe, einschließlich N,N-Dimethylaminoethylmethacrylat, N,N-Diethylaminoethylmethacrylat und Aminverbindungen mit einer Silylgruppe, einschließlich n-(Hydroxyethyl)-N-methylaminopropyltrimethoxysilan, Dimethoxyphenyl-2-piperidino-ethoxysilan, N,N-Diethylaminomethyltrimethoxysilan und (N,N-Diethyl-3-aminopropyl)trimethoxysilan.

10. Optisches Element, welches eine photochrome Überzugsschicht, gebildet durch Beschichten eines optischen Substrats mit der härtbaren Zusammensetzung, beschrieben in einem beliebigen der Ansprüche 1 und 2, und Härten der härtbaren Zusammensetzung, umfasst.

11. Optisches Element gemäß Anspruch 10, wobei eine harte Überzugsschicht auf der photochromen Überzugsschicht gebildet wird.

12. Optisches Element gemäß Anspruch 11, wobei eine Antireflexionsschicht auf der harten Überzugsschicht gebildet wird.

13. Optisches Element gemäß Anspruch 10, wobei das optische Substrat ein Kunststofflinsensubstrat ist.

## Revendications

1. Composition durcissable, qui comprend les composants suivants :
(1) un monomère polymérisable par radicaux,
(2) un composé organosilicium ayant un groupe époxy à une extrémité,
(3) un composé organosilicium ayant un groupe fonctionnel polymérisable par radicaux à une extrémité,
(4) un composé amine,
(5) un composé photochromique, et
(6) un initiateur de photopolymérisation,
où (2) le composé organosilicium ayant un groupe époxy à une extrémité est un composé ayant un groupe silanol ou un composé ayant un groupe qui forme un groupe silanol par hydrolyse, et (3) le composé organosilicium ayant un groupe fonctionnel polymérisable par radicaux à une extrémité est un composé ayant un groupe silanol ou un composé ayant un groupe qui forme un groupe silanol par hydrolyse.

2. Composition durcissable selon la revendication 1, qui comprend :
1,0 à 15 parties en poids de (2) composé organosilicium ayant un groupe époxy à une extrémité,
1,0 à 15 parties en poids de (3) composé organosilicium ayant un groupe fonctionnel polymérisable par radicaux à une extrémité,
0,01 à 20 parties en poids de (4) composé amine,
0,01 à 20 parties en poids de (5) composé photochromique, et
0,01 à 5 parties en poids de (6) l'initiateur de photopolymérisation
pour 100 parties en poids de (1) monomère polymérisable par radicaux.

3. Composition durcissable selon l'une quelconque des revendications 1 et 2, dans laquelle (1) le monomère polymérisable par radicaux comporte au moins un groupe polymérisable par radicaux choisi parmi un groupe acryloyle, un groupe méthacryloyle, un groupe acryloyloxy, un groupe méthacryloyloxy, un groupe vinyle, un groupe allyle et un groupe styryle.

4. Composition durcissable selon l'une quelconque des revendications 1 et 2, dans laquelle (1) le monomère polymérisable par radicaux comporte au moins un groupe polymérisable par radicaux choisi parmi un groupe acryloyle, un groupe méthacryloyle, un groupe acryloyloxy et un groupe méthacryloyloxy.

5. Composition durcissable selon l'une quelconque des revendications 1 et 2, dans laquelle (2) le composé organosilicium ayant un groupe époxy à une extrémité est un composé organosilicium représenté par la formule générale (I) suivants :
(R⁸¹)ₙ(R⁸³)_{b}Si(OR⁸²)_{4-(a+b)} (I)
dans laquelle R⁸¹ représente un groupe organique ayant un groupe époxy, R⁸² représente un groupe alkyle ayant 1 à 4 atomes de carbone, un groupe acyle ayant 1 à 4 atomes de carbone ou un groupe aryle ayant 6 à 10 atomes de carbone, R⁸³ représente un groupe alkyle ayant 1 à 6 atomes de carbone ou un groupe aryle ayant 6 à 10 atomes de carbone, a représente un entier de 1, et b représente un entier de 0 ou 1 ; ou un produit d'hydrolyse de celui-ci.

6. Composition durcissable selon la revendication 5, dans laquelle le groupe organique ayant un groupe époxy représenté par R⁸¹ est un groupe époxy, un groupe glycidoxy ou un groupe 3,4-époxycyclohexyle.

7. Composition durcissable selon l'une quelconque des revendications 1 et 2, dans laquelle (3) le composé organosilicium ayant un groupe fonctionnel polymérisable par radicaux à une extrémité est un composé organosilicium représenté par la formule générale (II) suivants :
(R⁸⁴)_{c}(R⁸⁶)_{d}Si(OR⁸⁵)_{4-(c+d)} (II)
dans laquelle R⁸⁴ représente un groupe organique ayant un groupe fonctionnel polymérisable par radicaux, R⁸⁵ représente un groupe alkyle ayant 1 à 4 atomes de carbone, un groupe acyle ayant 1 à 4 atomes de carbone ou un groupe aryle ayant 6 à 10 atomes de carbone, R⁸⁶ représente un groupe alkyle ayant 1 à 6 atomes de carbone ou un groupe aryle ayant 6 à 10 atomes de carbone, c représente un entier de 1, et d représente un entier de 0 ou 1 ; ou un produit d'hydrolyse de celui-ci.

8. Composition durcissable selon la revendication 7, dans laquelle le groupe organique ayant un groupe polymérisable par radicaux représenté par R⁸⁴ est un groupe acryloyle, un groupe méthacryloyle, un groupe acryloyloxy, un groupe méthacryloyloxy, un groupe vinyle, un groupe allyle ou un groupe styryle.

9. Composition durcissable selon l'une quelconque des revendications 1 et 2, dans laquelle (4) le composé amine est au moins un composé choisi parmi les composés amine à faible masse moléculaire non polymérisables incluant la triéthanolamine, la N-méthyldiéthanolamine, la triisopropanolamine, la 4,4-diméthylaminobenzophénone et le diazabicyclooctane, les composés amine ayant un groupe polymérisable incluant le méthacrylate de N,N-diméthylaminoéthyle et le méthacrylate de N,N-diéthylaminoéthyle, et les composés amine ayant un groupe silyle incluant le n-(hydroxyéthyl)-N-méthylaminopropyltriméthoxysilane, le diméthoxyphényl-2-pipéridino-éthoxysilane, le N,N-diéthylaminométhyltriméthoxysilane et le (N,N-diéthyl-3-aminopropyl)triméthoxysilane.

10. Organe optique qui comprend une couche de revêtement photochromique formée par revêtement d'un substrat optique avec la composition durcissable décrite dans l'une quelconque des revendications 1 et 2 et durcissement de la composition durcissable.

11. Organe optique selon la revendication 10, dans lequel une couche de revêtement dur est formée sur la couche de revêtement photochromique.

12. Organe optique selon la revendication 11, dans lequel une couche anti-reflet est formée sur la couche de revêtement dur.

13. Organe optique selon la revendication 10, dans lequel le substrat optique est un substrat de lentille en plastique.
